# EUROPÄISCHE PATENTSCHRIFT

(11) **EP 1 837 568 B1**
(45) Veröffentlichungstag und Bekanntmachung des Hinweises auf die Patenterteilung: **03.09.2008**
(21) Anmeldenummer: 07004991.1
(22) Anmeldetag: 10.03.2007
(51) Int. Cl.: F16K 31/60, F16K 11/078

(54) **Hebelventil**
Lever valve
Valve de levier

(30) Priorität: 15.03.2006 DE 102006012303; 24.05.2006 EP 06114457
(43) Veröffentlichungstag der Anmeldung: 26.09.2007
(73) Patentinhaber: Grohe AG, 58675 Hemer (DE)
(72) Erfinder: Faust, Günter, 58730 Fröndenberg (DE); Mönig, Benedikt, 59757 Arnsberg (DE)

(56) Entgegenhaltungen:
- EP-A1- 0 662 577
- WO-A-00/00765
- DE-A1- 4 340 713
- DE-A1- 4 437 370
- DE-A1- 10 138 304
- DE-U1- 20 012 582
- US-B1- 6 796 544

## Beschreibung

Die Erfindung bezieht sich auf ein Hebelventil mit einem aus einem Ventilgehäuse herausgeführten Stellhebel, der von einer im Ventilgehäuse angeordneten Buchse auf einer Schwenkachse gehalten ist, so dass durch eine Schwenkbewegung des Stellhebels in einer Schwenkbahn der Buchse eine Stellgröße für ein Ventilglied erzeugbar ist, wobei wenigstens ein radial zur Schwenkachse wirkender federnder Rastkörper als überwindbarer Anschlag beim Verschwenken des Stellhebels vorgesehen ist.

Ein Hebelventil dieser Gattung ist aus der deutschen Offenlegungsschrift DE 101 38 304 A1 bekannt. Bei dieser Ausbildung ist ein Rastkörper vorgesehen, der seitlich neben der Schwenkbahn auf einem Bogenstück in verschiedenen Stellungen fixierbar ist. Der Rastkörper wirkt hierbei mit einem am Stellgriff angeordneten Federelement zusammen, so dass ein überwindbarer Anschlag gebildet wird. Diese bekannte Einrichtung ist jedoch relativ aufwendig in der Herstellung und benötigt darüber hinaus verhältnismäßig viel Platz.

Der Erfindung liegt die Aufgabe zugrunde, das im Oberbegriff des Anspruchs 1 angegebene Hebelventil zu verbessern.

Diese Aufgabe wird bei einem gattungsgemäßen Ventil dadurch gelöst, dass in den beiden Seitenwänden der Schwenkbahn jeweils eine sich wenigstens über die Hälfte der Länge der Schwenkbahn erstreckende Ausnehmung ausgebildet ist, die sich von der äußeren Stirnseite der Buchse bis in die Nähe der Schwenkachse erstreckt, wobei in jeder Ausnehmung ein federnder Rastkörper mit wenigstens einem Rastnocken angeordnet ist, der mit wenigstens einer am Stellhebel vorgesehenen Rastnase zusammenwirkt. Weitere Ausgestaltungen der Erfindung sind in den nachgeordneten Ansprüchen 2 bis 15 angegeben.

Mit den erfindungsgemäßen Maßnahmen wird insbesondere erreicht, dass die Ausnehmungen in der Buchse für die Aufnahme der Rastkörper bei der Herstellung der Buchse aus Kunststoff im Spritzgießverfahren äußerst kostengünstig hergestellt werden können. Dabei werden die Rastkörper Platz sparend im Wesentlichen von den Ausnehmungen aufgenommen und können darüber hinaus ebenfalls kostengünstig im Spritzgießverfahren hergestellt werden. Außerdem können die Rastnasen unmittelbar am Stellhebel angeordnet werden, so dass eine besondere Befestigung am Stellgriff nicht mehr erforderlich ist.

In weiterer Ausgestaltung der Erfindung können die Rastkörper zweckmäßig mit jeweils einer Feder, vorteilhaft mit einer Schraubenfeder, versehen werden, die in einer Sackbohrung des Rastkörpers gehalten wird und sich im Grund der Ausnehmung abstützt. Der Querschnitt der Rastkörper kann etwa kreisabschnittförmig ausgebildet werden, wobei die Sehne des Kreisabschnittes eine Seitenwand der Schwenkbahn bildet. Hierbei kann der Rastkörper an der von der Sehne abgekehrten Seite mit einer zylindrischen Aufwölbung im Bereich der Schraubenfeder versehen werden, die von einer entsprechenden Einwölbung in der Ausnehmung in der Stecklage aufgenommen wird. Dabei ist am Rastkörper eine Führungsmantelfläche ausgebildet, deren Länge etwa dem 0,6 fachen bis 0,9 fachen der Länge der Ausnehmung entspricht, so dass eine verschleißarme Führung in der Ausnehmung der Buchse gewährleistet ist.
Nach einer weiteren Ausbildung der Erfindung kann vorteilhaft in der Ausnehmung wenigstens eine seitliche senkrecht zur Schwenkbahn angeordnete Stützfläche ausgebildet sein, an der der Rastkörper mit einer entsprechenden Anlagefläche abgestützt werden kann.

Nach einer weiteren bevorzugten Ausbildung der Erfindung kann neben den Rastnocken vorteilhaft eine konzentrisch zur Schwenkachse angeordnete Verzahnung auf dem Rastkörper ausgebildet werden, in die ein neben der Rastnase angeordneter Zahn nach Art einer Ratsche einfasst, so dass eine zusätzliche Feinrastung der Schwenkbewegung des Stellhebels erfolgt. Hierdurch kann auch sichergestellt werden, dass bei einem relativ schwer ausgebildeten, am Stellhebel befestigten Stellgriff ein unerwünschtes Selbstschließen des Ventils verhindert wird. Hierbei kann sich die Verzahnung zweckmäßig über die Schwenkbereiche erstrecken, in denen die Rastnocken und die Rastnasen nicht wirksam sind. Der neben der Rastnase angeordnete Zahn ist dabei senkrecht zur Mittelachse des Stellhebels an einem Balken angeordnet, der vorteilhaft einstückig an einem Ringelement oder an einer Isolierhülse angeformt ist, die über den im Querschnitt vorteilhaft quadratisch ausgebildeten Stellhebel überstreifbar und in der Stecklage fixierbar ist.
Als besonders günstig hat sich herausgestellt, wenn der Rastkörper und/oder der Balken aus dem Kunststoffwerkstoff Polyoxymethylen (POM-C) im Spritzgießverfahren hergestellt wird.

Ausführungsbeispiele der Erfindung sind in der Zeichnung dargestellt und werden im Folgenden näher beschrieben. Es zeigt in der Zeichnung
- Figur 1: eine Ventilkartusche in Perspektivansicht, die in oder an einem Körper einer Sanitärarmatur befestigt werden kann;
- Figur 2: die in Figur 1 gezeigte Ventilkartusche in der Schnittebene II der Figur 3;
- Figur 3: die in Figur 2 gezeigte Ventilkartusche in Ansicht von oben;
- Figur 4: einen Teil der in Figur 3 gezeigten Ventilkartusche in der Schnittebene IV;
- Figur 5: den in Figur 1 gezeigten Rastkörper in vergrößerter Darstellung in Seitenansicht;
- Figur 6: den in Figur 5 gezeigten Rastkörper in Seitenansicht um 90° gedreht;
- Figur 7: den in Figur 5 gezeigten Rastkörper in Ansicht von oben;
- Figur 8: den Rastkörper gemäß Figur 7 in der Schnittebene VIII;
- Figur 9: den in Figur 5 gezeigten Rastkörper in Perspektivansicht schräg von unten;
- Figur 10: die in Figur 1 gezeigte Rastnase mit einem Ringelement;
- Figur 11: das in Figur 10 gezeigte Ringelement mit den Rastnasen um 90° gedreht;
- Figur 12: die in Figur 10 gezeigte Rastnase mit Ringelement in Ansicht von unten;
- Figur 13: das in Figur 10 gezeigte Ringelement mit den Rastnasen in Ansicht von oben;
- Figur 14: einen abgewandelten Teil der in Figur 1 gezeigten Ventilkartusche, wobei neben den Rastnocken und der Rastnase noch eine Verzahnung mit der Wirkungsweise einer Ratsche ausgebildet ist;
- Figur 15: den in Figur 14 zum Teil gezeigten Rastkörper in Seitenansicht;
- Figur 16: den in Figur 15 gezeigten Rastkörper in paarweiser Anordnung in Perspektivansicht schräg von unten;
- Figur 17: die in Figur 16 gezeigte paarweise Anordnung der Rastkörper schräg von oben;
- Figur 18: die zum Teil in Figur 14 dargestellte Rastnase mit Ringelement in Seitenansicht;
- Figur 19: das in Figur 18 gezeigte Ringelement um 90° gedreht;
- Figur 20: das in Figur 18 gezeigte Ringelement in Ansicht von unten;
- Figur 21: das in Figur 18 gezeigte Ringelement in Ansicht von oben.

Bei den Ausführungsbeispielen in der Zeichnung sind der Einfachheit halber gleiche oder entsprechende Elemente mit jeweils gleichen Bezugszeichen versehen. Die Ausführungsbeispiele beziehen sich auf Ventilkartuschen, die im oder in Armaturenkörpern von Sanitärarmaturen angeordnet werden, wie sie beispielsweise aus der deutschen Offenlegungsschrift DE 101 38 304 A1 bekannt sind.

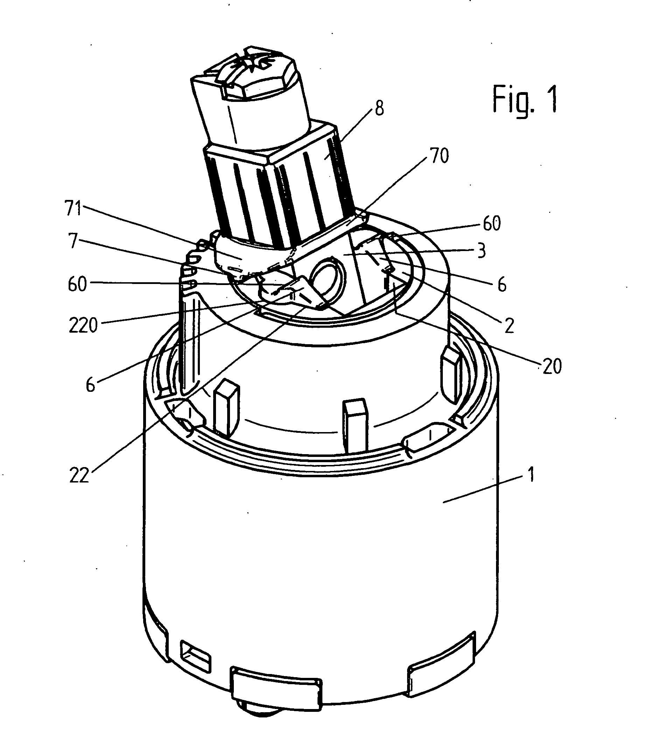

Das in Figur 1 bis 13 dargestellte Hebelventil ist in einem Ventilgehäuse 1 angeordnet. In dem Ventilgehäuse 1 ist eine Buchse 2 drehbar, aber axial festliegend angeordnet. Senkrecht zur Mittelachse 10 ist eine Schwenkachse 21 in der Buchse 2 angeordnet. In der Buchse 2 ist außerdem eine Schwenkbahn 20 vorgesehen, in der ein Stellhebel 3 um die Schwenkachse 21 verschwenkbar gelagert ist. Der Stellhebel 3 ist aus der Buchse 2 und dem Ventilgehäuse 1 einseitig herausgeführt und trägt am äußeren Ende eine Isolierhülse 8, auf der ein in der Zeichnung nicht dargestellter Stellgriff in bekannter Weise befestigbar ist. Der Stellhebel 3 hat am inneren Endbereich einen Zapfen 30, mit dem der Stellhebel 3 an einem bewegbaren Ventilglied 4 angelenkt ist. Das Ventilglied 4 liegt mit der zum Zapfen 30 gegenüberliegenden Stirnseite an einem fest im Ventilgehäuse 1 angeordneten Ventilglied 5 an. In dem festen Ventilglied 5 sind Zuflussöffnungen für Kalt- und Heißwasser sowie eine Abflussöffnung für Mischwasser ausgebildet. Die Zuflussöffnungen und die Abflussöffnungen können mit dem bewegbaren Ventilglied 4 mit Hilfe eines Überströmkanals 40 in Abhängigkeit von der gewählten Stellung abgesperrt oder mehr oder weniger in Überdeckung gebracht werden, so dass mit einer Drehbewegung um die Mittelachse 10 das Mischungsverhältnis des zufließenden Kalt- und Heißwassers und mit einer Schwenkbewegung um die Schwenkachse 21 die Gesamtdurchflussmenge des Wassers pro Zeiteinheit mit Hilfe des Stellhebels 3 eingestellt werden kann.

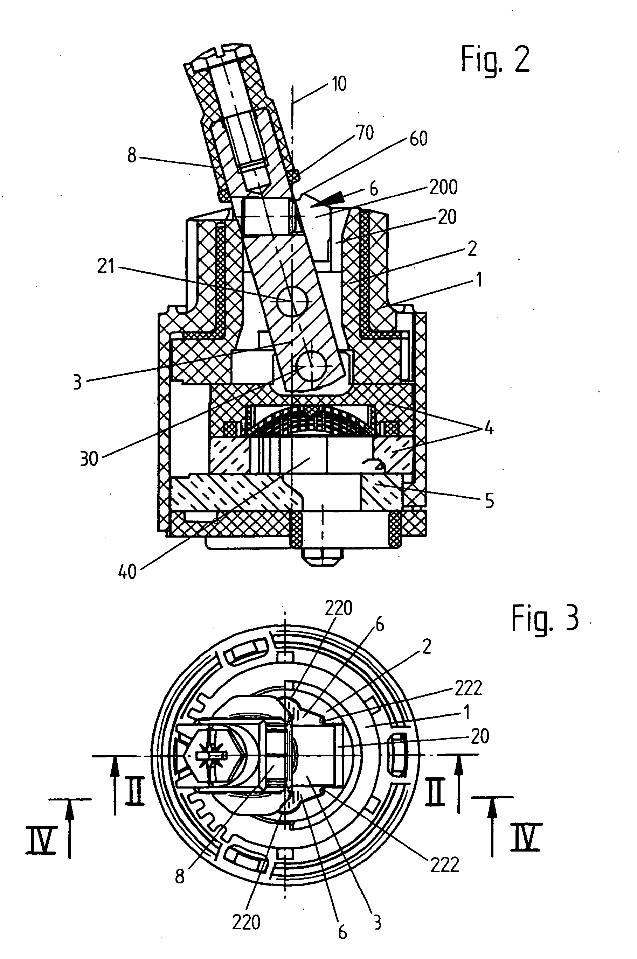

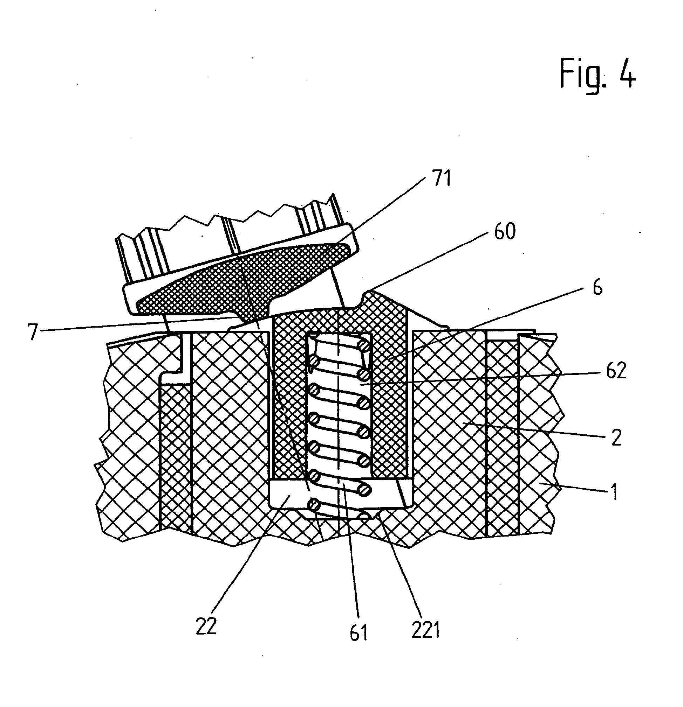

Zur Begrenzung der maximalen Wasserdurchflussmenge ist im Bereich der beiden Seitenwände in der Schwenkbahn 20 jeweils eine sich in etwa zu Dreiviertel der Länge der Schwenkbahn 20 sich erstreckende Ausnehmung ausgebildet. Die beiden Ausnehmungen 22 erstrecken sich jeweils von der äußeren Stirnseite der Buchse 2 bis in die Nähe der Schwenkachse 21. In den beiden Ausnehmungen 22 ist jeweils ein federnder, als überwindbarer Anschlag ausgebildeter Rastkörper 6 angeordnet, wie es insbesondere aus Figur 1 und Figur 3 der Zeichnung zu entnehmen ist. Der Rastkörper 6 trägt an der äußeren Stirnseite im mittleren Bereich einen dachförmig ausgebildeten Rastnocken 60, der jeweils mit einem am Stellhebel 3 senkrecht zur Mittelachse des Stellhebels 3 angeordneten Rastnase 7 einen überwindbaren Anschlag in der halb geöffneten Ventilposition bildet. Der Rastkörper 6 ist dabei jeweils von einer in einer Sackbohrung 62 angeordneten Schraubenfeder 61, die sich andererseits in einer Aussenkung 221 im Grund der Ausnehmung 22 abstützt, gegen die Rastnase 7 gedrückt, wie es insbesondere aus Figur 4 der Zeichnung zu entnehmen ist. Beim Öffnungsvorgang des Ventils gelangt dabei jeweils die Rastnase 7 auf einer konzentrisch zur Schwenkachse 21 ausgebildeten Gleitbahn auf dem Rastkörper 6 bis zur Anlage an den Rastnocken 60, so dass das Ventil sich in der Mittelstellung zwischen der Absperrstellung und der maximalen Öffnungsstellung befindet. Durch eine erhöhte Krafteinleitung in den Stellhebel 3 durch den Benutzer wird von der Rastnase 7 auf Grund der schrägen Dachfläche der Rastnocken 60 der Rastkörper 6 axial in Richtung auf die Schwenkachse 21 ausgelenkt, so dass danach der Schwenkweg bis zur Maximalöffnung des Ventils freigegeben wird.

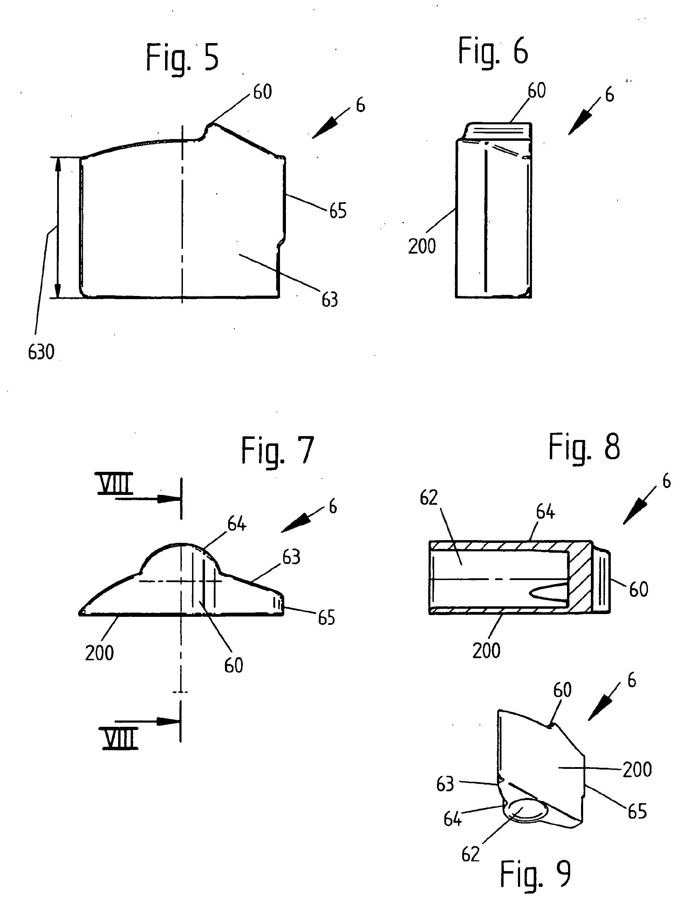

Die beiden spiegelbildlich ausgebildeten Rastkörper 6 weisen eine Führungsmantelfläche 63 auf, deren Länge 630 in etwa das 0,8 fache der Länge der Aussenkung 22 aufweist. Der Rastkörper 6 weist dabei im Querschnitt jeweils etwa die Form eines Kreisabschnittes auf, wobei die Sehne des Kreisabschnittes im Wesentlichen eine Seitenwand 200 der Schwenkbahn 20 bildet. Darüber hinaus ist im Bereich der Schraubenfeder 61 an der der Seitenwand 200 gegenüberliegenden Seite eine zylindrische Aufwölbung 64 vorgesehen, wie es insbesondere aus Figur 7 und 8 der Zeichnung zu entnehmen ist. Außerdem ist an dem Rastkörper 6 seitlich eine senkrecht zur Schwenkbahn ausgebildete Anlagefläche 65 ausgebildet, die an einer entsprechenden Stützfläche 222 in der Ausnehmung 22 gleitend anliegt. Für die zylindrische Aufwölbung 64 ist in der Ausnehmung 22 eine entsprechende zylindrische Einwölbung 220 ausgebildet.

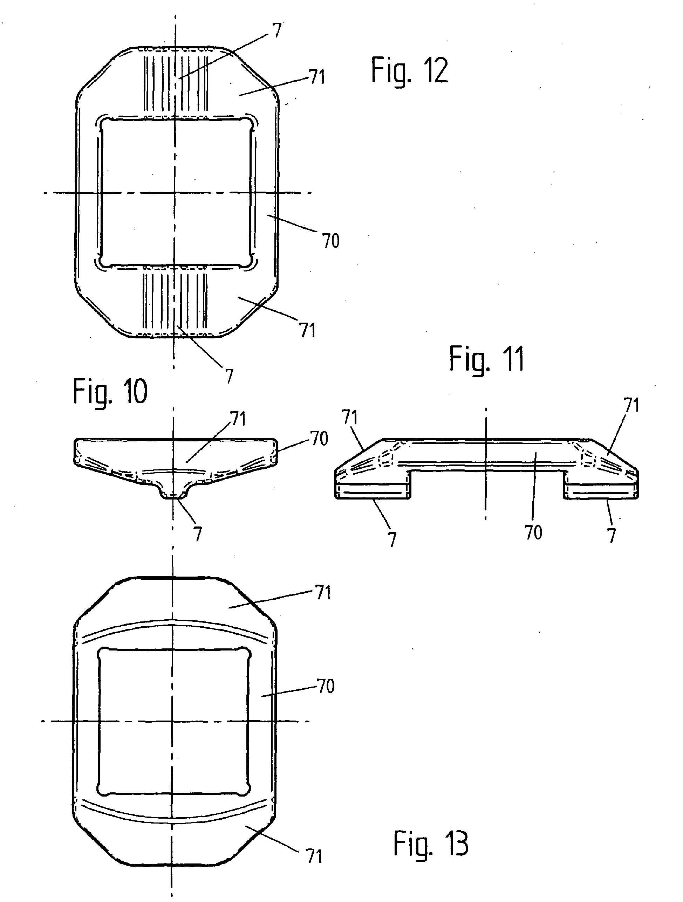

Die Rastnase 7 ist, wie es insbesondere aus Figur 10 bis 13 der Zeichnung zu entnehmen ist, einstückig an einem Balken 71 angeformt, wobei der Balken wiederum Teil eines Ringelements 70 ist. Das Ringelement 70 weist eine quadratische Öffnung auf, mit der das Ringelement 70 über einen ebenfalls einen quadratischen Querschnitt aufweisenden Stellhebel 3 aufstreifbar ist. Der Axialanschlag des Ringelements 70 auf dem Stellhebel 3 wird von einer am äußeren Ende in bekannter Weise befestigbaren Isolierhülse 8 gebildet, wobei auf der Isolierhülse 8 ein in der Zeichnung nicht dargestellter Stellgriff isoliert befestigbar ist. Das Ringelement 70 mit den Balken 71 und den Rastnasen 7 ist dabei einstückig aus Kunststoff im Spritzgießverfahren hergestellt worden.

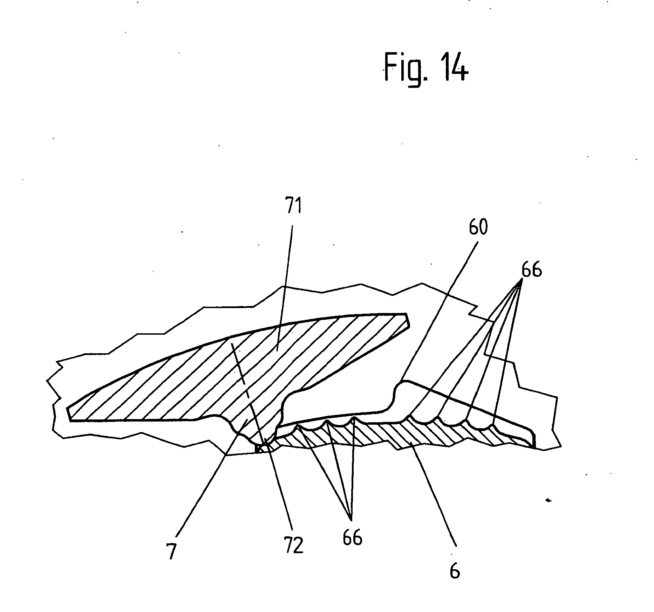

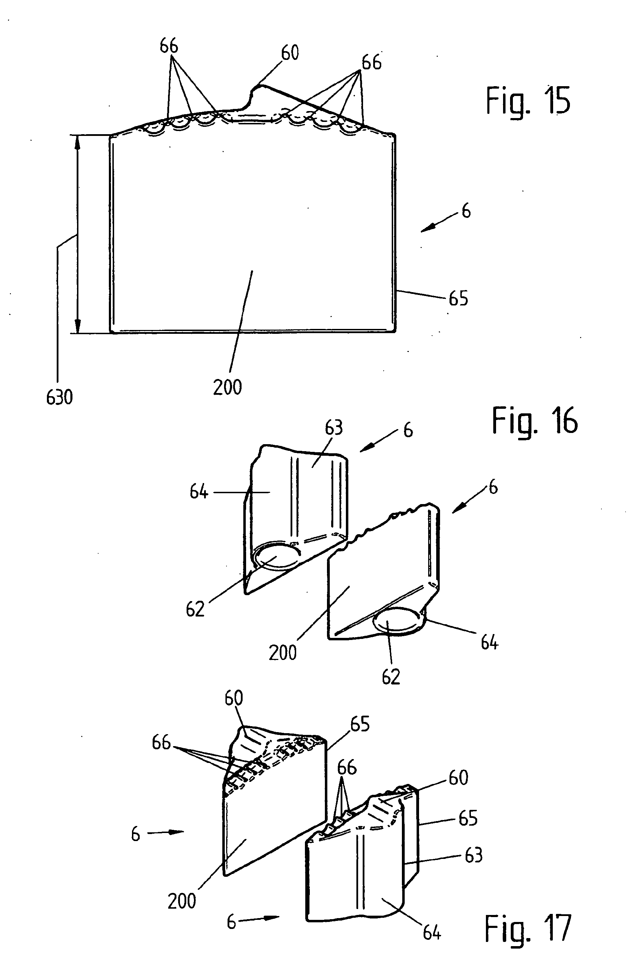

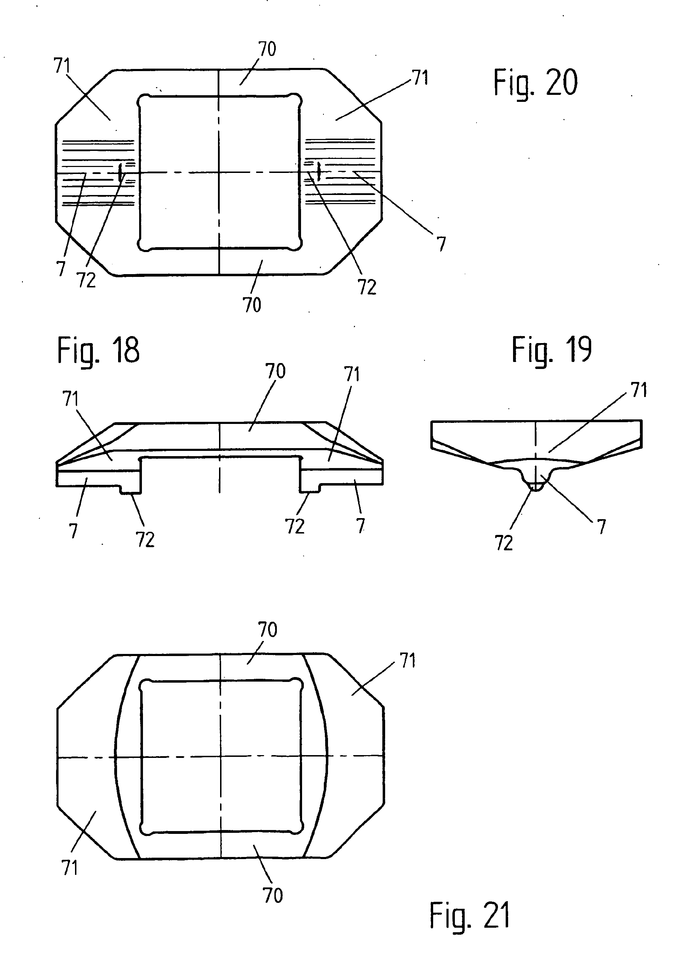

Ein abgewandeltes Ausführungsbeispiel ist in Figur 14 bis Figur 21 der Zeichnung dargestellt. Dieses Ausführungsbeispiel unterscheidet sich zu dem vorbeschriebenen im Wesentlichen dadurch, dass neben der Rastnocke 60 jeweils eine konzentrisch zur Schwenkachse 21 angeordnete Verzahnung 66 vorgesehen ist. Die Verzahnung 66 schließt hierbei unmittelbar an der Seitenwand 200 an, während der Rastnocken 60 jeweils weiter außerhalb im Bereich der Stirnseite der zylindrischen Aufwölbung 64 angeordnet ist, wie es insbesondere aus Figur 17 der Zeichnung zu entnehmen ist. Außerdem ist an dem Ringelement 70 im Bereich der Rastnase 7 jeweils ein verlängerter Zahn 72 für den Eingriff in die Verzahnung 66 ausgebildet, wie es insbesondere aus Figur 18 und 19 der Zeichnung zu entnehmen ist. Durch das Zusammenwirken der Verzahnung 66 mit dem Zahn 72 kann neben dem überwindbaren Anschlag eine feinstufige Verrastung beim Öffnungs- und Schließvorgang des Ventils erzielt werden, mit dem außerdem erreicht wird, wenn z.B. aus Designgründen ein relativ schwerer metallener Stellgriff eingesetzt wird, dass ein unerwünschtes selbsttätiges Schließen des Ventils verhindert wird.

## Patentansprüche

1. Hebelventil mit einem aus einem Ventilgehäuse (1) herausgeführten Stellhebel (3), der von einer im Ventilgehäuse (1) angeordneten Buchse (2) auf einer Schwenkachse (21) gehalten ist, so dass durch eine Schwenkbewegung des Stellhebels (3) in einer Schwenkbahn (20) der Buchse (2) eine Stellgröße für ein Ventilglied (4) erzeugbar ist, wobei wenigstens ein radial zur Schwenkachse (21) wirkender federnder Rastkörper (6) als überwindbarer Anschlag beim Verschwenken des Stellhebels (3) vorgesehen ist, **dadurch gekennzeichnet, dass** in den beiden Seitenwänden der Schwenkbahn (20) jeweils eine sich wenigstens über die Hälfte der Länge der Schwenkbahn (20) erstreckende Ausnehmung (22) ausgebildet ist, die sich von der äußeren Stirnseite der Buchse (2) bis in die Nähe der Schwenkachse (21) erstreckt, wobei in jeder Ausnehmung (22) ein federnder Rastkörper (6) mit wenigstens einem Rastnocken (60) angeordnet ist, der mit wenigstens einer am Stellhebel (3) vorgesehenen Rastnase (7) zusammenwirkt.

2. Hebelventil nach Anspruch 1, **dadurch gekennzeichnet, dass** die Rastkörper (6) jeweils von einer Feder, die sich im Grund der Ausnehmung (22) in der Nähe der Schwenkachse (21) abstützt, gegen die Rastnase (7) gedrückt sind.

3. Hebelventil nach Anspruch 2, **dadurch gekennzeichnet, dass** als Feder eine Schraubenfeder (61) vorgesehen ist, die von einer Sackbohrung (62) im Rastkörper (6) gehalten ist.

4. Hebelventil nach einem der vorhergehenden Ansprüche, **dadurch gekennzeichnet, dass** der Querschnitt des Rastkörpers (6) etwa als Kreisabschnitt ausgebildet ist, wobei die Sehne des Kreisabschnitts wenigstens einen Teil einer Seitenwand (200) in der Schwenkbahn (20) bildet.

5. Hebelventil nach Anspruch 4, **dadurch gekennzeichnet, dass** an der der Seitenwand (200) gegenüberliegenden Seite im Bereich der Schraubenfeder (61) eine zylindrische Aufwölbung (64) und in der Ausnehmung (22) eine entsprechende zylindrische Einwölbung (220) vorgesehen ist.

6. Hebelventil nach wenigstens einem der vorhergehenden Ansprüche, **dadurch gekennzeichnet, dass** der Rastkörper (6) jeweils eine Führungsmantelfläche (63) aufweist.

7. Hebelventil nach Anspruch 6, **dadurch gekennzeichnet, dass** die Führungsmantelfläche (63) eine Länge (630) aufweist, die dem 0,6 fachen bis 0,9 fachen der Länge der Ausnehmung (22) von der äußeren Stirnseite der Buchse (2) bis in den Grund der Ausnehmung (22) entspricht.

8. Hebelventil nach wenigstens einem der vorhergehenden Ansprüche, **dadurch gekennzeichnet, dass** im Grund der Ausnehmung (22) eine Einsenkung (221) für die Aufnahme und Abstützung der Schraubenfeder (61) ausgebildet ist.

9. Hebelventil nach wenigstens einem der vorhergehenden Ansprüche, **dadurch gekennzeichnet, dass** in der Ausnehmung (22) wenigstens eine seitliche Stützfläche (222) ausgebildet ist, an der der Rastkörper (6) mit einer entsprechenden Anlagefläche (65) abgestützt ist.

10. Hebelventil nach wenigstens einem der vorhergehenden Ansprüche, **dadurch gekennzeichnet, dass** neben wenigstens einem Rastnocken (60) eine konzentrisch zur Schwenkachse (21) angeordnete Verzahnung (66) auf dem Rastkörper (6) ausgebildet ist, in die wenigstens ein neben der Rastnase (7) angeordneter Zahn (72) nach Art einer Ratsche einfasst.

11. Hebelventil nach Anspruch 10, **dadurch gekennzeichnet, dass** die Verzahnung (66) sich wenigstens über einen Teil des Schwenkbereichs des Stellhebels (3) erstreckt.

12. Hebelventil nach wenigstens einem der vorhergehenden Ansprüche, **dadurch gekennzeichnet, dass** die Rastnasen (7) jeweils senkrecht zur Mittelachse des Stellhebels (3) angeordnet sind.

13. Hebelventil nach Anspruch 12, **dadurch gekennzeichnet, dass** die Rastnasen (7) jeweils an einem Balken (71) angeordnet sind, der an einem Ringelement (70) oder an einer Isolierhülse angeformt ist.

14. Hebelventil nach wenigstens einem der vorhergehenden Ansprüche, **dadurch gekennzeichnet, dass** der Rastkörper (6) und/oder das Ringelement (70) mit den Balken (71) aus Kunststoff im Spritzgießverfahren hergestellt ist.

15. Hebelventil nach Anspruch 14, **dadurch gekennzeichnet, dass** als Kunststoffwerkstoff Polyoxymethylen (POM-C) eingesetzt ist.

## Claims

1. Lever valve having an adjusting lever (3) extending out from a valve housing (1), which lever is held, by a bushing (2) arranged in the valve housing (1), on a pivot pin (21) so that, as a result of a pivoting movement of the adjusting lever (3) in a pivot guideway (20) of the bushing (2), a variable setting for a valve member (4) can be produced, there being provided as a stop, which is capable of being overcome, when pivoting the adjusting lever (3), at least one spring-loaded latching body (6) acting in a radial direction to the pivot pin (21), **characterised in that** in each of the two side walls of the pivot guideway (20) there is formed, extending at least over half the length of the pivot guideway (20), a recess (22) which extends from the outer end face of the bushing (2) to the vicinity of the pivot pin (21), there being arranged in each recess (22) a spring-loaded latching body (6) having at least one latching lug (60), which co-operates with at least one latching nose (7) provided on the adjusting lever (3).

2. Lever valve according to claim 1, **characterised in that** each of the latching bodies (6) is biased against the latching nose (7) by a spring, which is supported at the bottom of the recess (22) in the vicinity of the pivot pin (21).

3. Lever valve according to claim 2, **characterised in that** as the spring there is provided a helical spring (61), which is held by a blind hole (62) in the latching body (6).

4. Lever valve according to one of the preceding claims, **characterised in that** the cross-section of the latching body (6) is formed approximately in the shape of a segment of a circle, the chord of the segment of a circle forming at least part of a side wall (200) in the pivot guideway (20).

5. Lever valve according to claim 4, **characterised in that** there is provided, at the side located opposite the side wall (200), in the region of the helical spring (61), a cylindrical bulge (64) and, in the recess (22), a corresponding cylindrical indentation (220).

6. Lever valve according to at least one of the preceding claims, **characterised in that** each latching body (6) has an outer guide surface (63).

7. Lever valve according to claim 6, **characterised in that** the outer guide surface (63) has a length (630) which corresponds to from 0.6 times to 0.9 times the length of the recess (22) from the outer end face of the bushing (2) to the bottom of the recess (22).

8. Lever valve according to at least one of the preceding claims, **characterised in that** in the bottom of the recess (22) there is formed a depression (221) for accommodation and support of the helical spring (61).

9. Lever valve according to at least one of the preceding claims, **characterised in that** in the recess (22) there is formed at least one lateral supporting surface (222), against which the latching body (6), by means of a corresponding contact surface (65), is supported.

10. Lever valve according to at least one of the preceding claims, **characterised in that**, beside at least one latching lug (60), there is formed on the latching body (6) a toothed arrangement (66) arranged concentrically to the pivot pin (21), in which toothed arrangement at least one tooth (72) arranged beside the latching nose (7) engages as in a ratchet.

11. Lever valve according to claim 10, **characterised in that** the toothed arrangement (66) extends at least over part of the pivoting range of the adjusting lever (3).

12. Lever valve according to at least one of the preceding claims, **characterised in that** each of the latching noses (7) is arranged perpendicular to the central axis of the adjusting lever (3).

13. Lever valve according to claim 12, **characterised in that** each of the latching noses (7) is arranged on a bar (71) which is formed on a ring element (70) or on an insulating sleeve.

14. Lever valve according to at least one of the preceding claims, **characterised in that** the latching body (6) and/or the ring element (7) having the bar (71) is/are made of plastics material by an injection-moulding method.

15. Lever valve according to claim 14, **characterised in that** polyoxymethylene (POM-C) is used as plastics material.

## Revendications

1. Vanne à levier comportant un levier de réglage (3) sortant d'un corps de vanne (1), ce levier étant tenu pivotant par un manchon (2) logé dans le corps de vanne (1) sur un axe de pivotement (21) de façon qu'un mouvement de pivotement du levier de réglage (3) selon une trajectoire de pivotement (20) du manchon (2) génère une grandeur de réglage pour un organe de vanne (4),
au moins un organe d'encliquetage (6) élastique, agissant radialement par rapport à l'axe de pivotement (21) constituant une butée susceptible d'être dépassée par le pivotement du levier de réglage (3),
**caractérisée en ce que**
les deux parois latérales de la trajectoire de pivotement (20), ont une cavité (22) respective, s'étendant au moins sur la moitié de la longueur de la trajectoire de pivotement (20), cette cavité allant de la face frontale extérieure du manchon (2) jusqu'à proximité de l'axe de pivotement (21), et
chaque cavité (22) loge un organe d'encliquetage (6), à ressort muni d'au moins une came d'encliquetage (60) coopérant avec au moins un bec d'encliquetage (7) prévu sur le levier de réglage (3).

2. Vanne à levier selon la revendication 1,
**caractérisée en ce que**
l'organe d'encliquetage (6) est poussé contre le bec d'encliquetage (7) par un ressort s'appuyant contre le fond de la cavité (22) à proximité de l'axe de pivotement (21).

3. Vanne à levier selon la revendication 2,
**caractérisée en ce que**
le ressort est un ressort hélicoïdal (61) logé dans un perçage borgne (62) de l'organe d'encliquetage (6).

4. Vanne à levier selon l'une des revendications précédentes,
**caractérisée en ce que**
la section de l'organe d'encliquetage (6) correspond sensiblement à un arc de cercle dont la corde forme au moins une partie d'une paroi latérale (200) dans la trajectoire de pivotement (20).

5. Vanne à levier selon la revendication 4,
**caractérisée en ce que**
sur le côté opposé à celui de la paroi latérale (200), dans la région du ressort hélicoïdal (61), il y a une partie bombée (64), cylindrique et la cavité (22) comporte une partie en creux (220) cylindrique correspondante.

6. Vanne à levier selon au moins l'une des revendications précédentes,
**caractérisée en ce que**
l'organe d'encliquetage (6) présente respectivement une surface enveloppe de guidage (63).

7. Vanne à levier selon la revendication 6,
**caractérisée en ce que**
la surface enveloppe de guidage (63) a une longueur (603) qui correspond entre 0,6 et 0,9 fois la longueur de la cavité (22) de la face frontale extérieure du manchon (2) jusqu'au fond de la cavité (22).

8. Vanne à levier selon au moins l'une des revendications précédentes,
**caractérisée en ce qu'**
le fond de la cavité (22), a une partie en creux (221) pour recevoir et soutenir le ressort hélicoïdal (61).

9. Vanne à levier selon au moins l'une des revendications précédentes,
**caractérisée en ce que**
la cavité (22), a au moins une surface d'appui latérale (222) contre laquelle s'appuie l'organe d'encliquetage (6) par une surface d'appui (65) correspondante.

10. Vanne à levier selon au moins l'une des revendications précédentes,
**caractérisée en ce qu'**
à côté d'au moins une came d'encliquetage (60), il y a une denture (66) concentrique à l'axe de pivotement (21) réalisée sur l'organe d'encliquetage (6), et dans laquelle vient prendre à la manière d'un cliquet, au moins une dent (72) prévue à côté du bec d'encliquetage (7).

11. Vanne à levier selon la revendication 10,
**caractérisée en ce que**
la denture (66) occupe au moins une partie de la plage de pivotement du levier de réglage (3).

12. Vanne à levier selon au moins l'une des revendications précédentes,
**caractérisée en ce que**
les becs d'encliquetage (7) sont installés chacun perpendiculairement à l'axe géométrique du levier de réglage (3).

13. Vanne à levier selon la revendication 12,
**caractérisée en ce que**
les becs d'encliquetage (7) sont prévus respectivement sur une barre (71) formée sur un élément annulaire (70) ou sur un manchon isolant.

14. Vanne à levier selon au moins l'une des revendications précédentes,
**caractérisée en ce que**
l'organe d'encliquetage (6) et/ ou l'élément annulaire (70) avec les barres (71) sont fabriqués en matière plastique par un procédé d'injection.

15. Vanne à levier selon la revendication 14,
**caractérisée en ce que**
la matière plastique est du polyoxyméthylène (POM-C).
